# EUROPEAN PATENT SPECIFICATION

(11) **EP 2 597 571 B1**
(45) Date of publication and mention of the grant of the patent: **18.06.2014**
(21) Application number: 12192626.5
(22) Date of filing: 14.11.2012
(51) Int. Cl.: G06F 11/07, H02M 7/06

(54) **Safety-related communication device**
Sicherheitsbezogene Kommunikationsvorrichtung
Dispositif de communication sécurisée

(30) Priority: 25.11.2011 JP 2011257235
(43) Date of publication of application: 29.05.2013
(73) Proprietor: Hitachi Ltd., Tokyo (JP)
(72) Inventor: Shibata, Naoki, Chiyoda-ku, Tokyo 100-8220, (JP); Kanekawa, Nobuyasu, Chiyoda-ku, Tokyo 100-8220, (JP); Maekawa, Keiji, Chiyoda-ku, Tokyo 100-8220, (JP)
(74) Representative: Calderbank, Thomas Roger

(56) References cited:
- US-A- 4 611 291
- Anonymous: "Voltage multiplier", , 23 November 2011 (2011-11-23), pages 1-7, XP055059627, Wikipedia Retrieved from the Internet: URL:http://en.wikipedia.org/w/index.php?ti tle=Voltage_multiplier&oldid=462130478 [retrieved on 2013-04-15]

## Description

The present invention relates to a safety-related communication system used for railways, in particular, pertaining to such signalling system as safety-related transmission and reception for railways being coupled through networks.

### BACKGROUND ART

With the safety-related system for railways such as computer-based interlocking whose system is being further electronically configured, the number of devices controlled by communication from a fail-safe processor increases, in which a mechanism to halt communication in a fail-safe manner leads to enhancing the safety of the processor.

In the system of the related art, safety-related communication data is outputted through an outputting communication board, in which when the processor normally functions, a signal voltage is placed into such oscillation state as alternatively repeating two values: high voltage (H) and low voltage (L) whereas when it is detected that it malfunctions, an alternating signal is inputted to halt the oscillation so that an output voltage of a fail-safe amplifier (FS-AMP) arranged to generate a DC voltage during the oscillation continuation lowers upon the processor malfunctioning and the alternating signal being halted, with the result that such output voltage does not reach that to operate a relay to turn on the power of the communication board, thereby, the power relay being turned off so as to turn off the power of the communication board and to halt the communication.

Further, for another example, also in the related art disclosed in Patent Document 1, it is required that a fail-safe circuit be independently provided, which circuit is arranged such that the output voltage does not reach the operational thresholds of the subsequent elements such that when malfunction occurs on a fail-safe sensor upon a signal from the sensor being received, an input from the sensor is not outputted to such elements.

[Patent Document 1] Japanese Patent Unexamined Application Publication No. HEI11(1999)-31998

US-A-4611291 discloses an interface system in which a vital processor normally provides an alternating signal to a decoder but does not provide that signal when there is a failure of the processor, thereby to signal that failure. Vital output interfaces generate output signal based on control signals from the processor. The decoder provide power supply to the output interfaces, so that the power supply to those interfaces is halted in the event of a failure.

### DISCLOSURE OF THE INVENTION

As described above, in the known safety-related system of Patent Document 1, it requires a communication board provided with a power relay to turn off the power at the time of malfunctions. For such power relay, it is required to incorporate an electromagnetic solenoid and the like therein, which necessitates a high voltage power supply, and such replay becomes larger in size because it requires insulation, so that it requires such communication board independently provided from the processor. In Patent Document 1 as well, in order to process an input from the sensor in a fail-safe manner, it is required to independently incorporate a special circuit acting as the output circuit.

The present invention seeks to provide a safety-related communication device, in which a power supply circuit acting as the output circuit is incorporated in the same board where the processor is disposed and which realizes a fail-safe signal output without using such power relay or special output circuit as mentioned above.

According to the present invention there is provided a safety-related communication device comprising a failure detection means to normally output an alternating signal whereas to halt an output of the alternating signal at a time of malfunction; a processor; an output element to input a signal output from the processor so as to generate a signal output; and a power supply circuit to supply power to the output element, the power supply circuit being arranged such that it converts the alternating signal outputted from the failure detection means so as to output the power for the output element whereas the power supply to the output element is halted at the time of malfunction,
wherein:
in the power supply circuit, a negative voltage rectification circuit, an electronic oscillator and a positive voltage rectification circuit are coupled in series and have a reference voltage in common;
the negative voltage rectification circuit is arranged to receive the alternating signal and output a negative DC voltage, the electronic oscillator is arranged to receive the negative DC voltage and output an alternating signal oscillating to a negative voltage side, and the positive voltage rectification circuit is arranged to receive the alternating signal oscillating to a negative side and output a positive DC voltage; and the positive voltage rectification circuit is arranged such that it supplies the power to the output element based on the alternating signal inputted to the negative voltage rectification circuit.

Preferably a power amplification transistor coupled to a DC power supply having a positive voltage is provided to an input side of the negative voltage rectification circuit.

Preferably, a transistor is provided to an input side of the positive voltage rectification circuit and the positive voltage rectification circuit is coupled to a reference voltage lower than the operational voltage of the output element.

### Industrial Applicability

According to the present invention, a fail-safe communication output is realized by adding to the same board where the processor is disposed such a fail-safe power supply circuit as converting the alternating signal outputted from the failure detection means so as to output power to the output element without any modification to the transmission path from the processor of the safety-related communication device to the output element thereof and from the output element thereof to the exterior thereof.

In the drawings:
FIG.1 is a view showing the arrangement of the first embodiment according to the present invention.
FIG.2 is a block diagram of the power supply circuit according to the first embodiment of the present invention.
FIG.3 is a concrete example of the power supply circuit according to the first embodiment of the present invention.
FIG.4 is a view showing the operational voltages at the respective sections of the power supply circuit according to the first embodiment.
FIG.5 is a view showing a modified example of the first embodiment.
FIG.6 is a concrete example of the power supply circuit according to the second embodiment of the present invention.
FIG.7 is a concrete example of the power supply circuit according to the third embodiment of the present invention.

As for the safety-related communication device realizing a fail-safe communication output by adding to the same board where the processor is disposed such a fail-safe power supply circuit as converting the alternating signal outputted from the failure detection means so as to output power to the output element without any modification to the transmission path from the processor thereof to the output element thereof and from the output element thereof to the exterior thereof, the preferred embodiments thereof are described below with reference to the accompanying drawings.

### First Embodiment

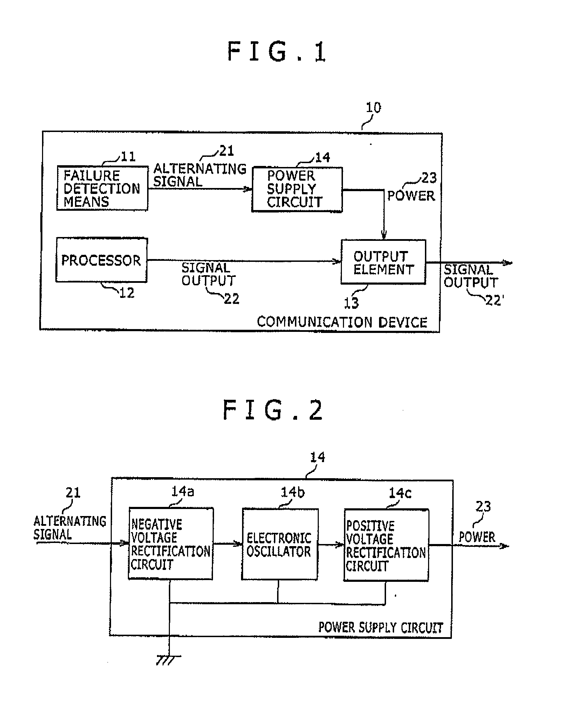

FIG. 1 is a view showing the arrangement of the safety-related communication device according to the first embodiment of the invention, in which it is shown that the device has a processor 12 to compute a signal output 22; and an output element 13 to input the signal output 22 from the processor 12 so as to generate a signal output 22', which device further has a failure detection means 11 to normally output an alternating signal 21 in the oscillation state whereas to halt the oscillation of the alternating signal 21 at the time of malfunction; a power supply circuit 14 to convert the alternating signal 21 outputted from the failure detection means 11 so as to output power 23 for the output element 13.

Hereupon, for instance, provided that a dual system arrangement, in which there are provided two CPUs, is adopted for the processor, the failure detection means 11 determines that the processor is normal when the computation results of those two CPUs are the same whereas determining that it malfunctions when such results are not the same.

To note, the contents of malfunctions that the failure detection means 11 determines to be out of order is not limited to the malfunction of the processor as mentioned above, but may well be based on those on the safety-related communication device as a whole e.g., such malfunction as the operational temperature of such device going beyond that up to which such temperature is guaranteed.

FIG.2 is a view showing the block diagram of the power supply circuit according to the second embodiment of the present invention.

In the power supply circuit 14, a negative voltage rectification circuit 14a, an electronic oscillator 14b and a positive voltage rectification circuit 14c having a reference voltage in common are coupled in series. The negative voltage rectification circuit 14a, upon an alternating signal 21 being inputted therein, outputs a negative DC voltage. The electronic oscillator 14b inputs the negative DC voltage outputted from the negative voltage rectification circuit 14a so as to output an alternating signal oscillating to a negative voltage side. Then, this negative alternating signal is inputted to the positive voltage rectification circuit 14c, and the latter outputs a positive DC voltage turning to be power for the output element 13.

Hereupon, when the failure detection means 11 detects a malfunction of the processor so as to halt the oscillation of the alternating signal 21, an electric current does not flow to an output side of the negative voltage rectification circuit 14a so that the output of the negative DC voltage is halted.

Upon the negative voltage rectification circuit 14a halting the output of the negative DC voltage, it results that the electronic oscillator 14b also halts the output of the alternating signal oscillating to the negative voltage side as well as the positive voltage rectification circuit 14c halts the output of the positive DC voltage.

In conclusion, on account that the power 23 is not supplied to the output element 13 so that the signal output 22' is not outputted, the failure detection means 11 detects such malfunction so as to halt the oscillation of the alternating signal 21, thereby, allowing the signal output 22' to be securely halted.

In this way, arranging such that the power is not outputted upon the oscillation of the alternating signal being halted permits an output from the output element to be prevented at the time of malfunction.

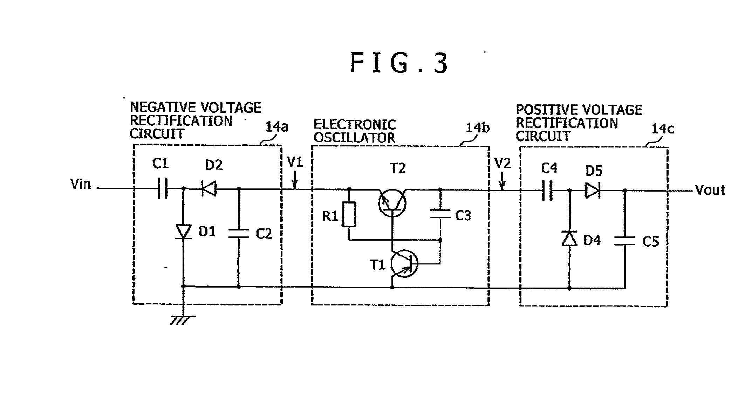

FIG.3 shows a concrete example of the power supply circuit according to the present invention.

The negative voltage rectification circuit 14a has capacitors C1, C2 and diodes D1, D2 while the positive voltage rectification circuit 14c has capacitors C4, C5 and diodes D4, D5.

Then, the electronic oscillator 14b has a capacitor C3, transistors T1 and T2 as well as a resistance R1.

Only the alternating signal 21 is inputted to any of those circuits, and power is not supplied from the exterior to any one of them. Accordingly, upon the oscillation of the alternating signal 21 being halted, there is nothing to supply energy to the power supply circuit 14, so that the power 23 supply is securely halted.

Further, at the negative voltage rectification circuit 14a, upon the capacitor C1 being short-circuited owing to electric breakdown and so forth, a voltage is not charged to the capacitor C1, so that a voltage is charged neither to the capacitor C2 and a potential difference of the output side of the rectification circuit 14a to the electronic oscillator 14b is dissipated, so that the electronic oscillator 14b cannot generate alternation, with the result that the power 23 is not supplied to the output element.

Upon the diode D1 being short-circuited, a potential difference is lost at the input side of the rectification circuit 14a and an electric charge applied to the capacitor C1 escapes to such input side as well as a potential difference of the output side of the rectification circuit 14a to the electronic oscillator 14b is dissipated, so that the electronic oscillator 14b cannot generate alternation, with the result that the power 23 is not supplied to the output element.

Upon the diode D2 being short-circuited, a positive voltage is charged to the capacitor C2 so as to turn an output of the rectification circuit 14a into a positive voltage, which makes it impossible for the electronic oscillator 14b to generate alternation, with the result that the power 23 is not supplied to the output element.

Further, upon the capacitor C2 being short-circuited, a voltage is not charged thereto and a potential difference of the output side of the rectification circuit 14a to the electronic oscillator 14b is dissipated, so that the electronic oscillator 14b cannot generate alternation, with the result that the power 23 is not supplied to the output element.

Moreover, at the electronic oscillator 14b, upon the resistance R1 being subjected to open faults, a voltage is not charged to the capacitor C3 and the transistor T1 is not turned on, so that the transistor T2 is neither turned on, with the result that the electronic oscillator 14b cannot generate alternation.

Upon the capacitor C3 being short-circuited, a voltage is not charged thereto and the transistor T1 is not turned on, so that the transistor T2 is neither turned on, with the result that the electronic oscillator 14b cannot generate alternation.

Upon the transistor T1 being subjected to switch-ON failure or switch-OFF failure, it is constantly turned on or turned off, and then T2 is constantly turned on or turned off, with the result that the electronic oscillator 14b cannot generate alternation.

Upon the transistor T2 being subjected to switch-ON failure or switch-OFF failure, it is constantly turned on or turned off, with the result that the electronic oscillator 14b cannot generate alternation.

In this way, upon the electronic oscillator 14b not generating alternation, the positive voltage rectification circuit 14c cannot generate a positive DC voltage, with the result that the power 23 is not supplied to the output element.

Furthermore, at the positive voltage rectification circuit 14c, upon the capacitor C4 being short-circuited owing to electric breakdown and so forth, a voltage is not charged thereto so that a voltage is charged neither to the capacitor C5, with the result that the power is not supplied to the output element.

Upon the diode D4 being short-circuited, an electric charge applied to the capacitor C4 escapes so that a potential difference of the output side of the rectification circuit 14c is dissipated, with the result that the power 23 is not supplied to the output element.

Upon the diode D5 being short-circuited, a negative voltage is charged to the capacitor C5, with the result that a positive voltage is not supplied for the power 23.

Further, upon the capacitor C5 being short-circuited, a voltage is not charged to the capacitor C5 so that a potential difference of the output side of the rectification circuit 14c is dissipated, with the result that the power 23 is not supplied to the output element.

In this way, also when the power supply circuit 14 in itself malfunctions, the power 23 supply can be halted.

The respective circuits have a reference voltage in common, so that they can be arranged without using such insulation device as a transformer, with the result that the circuits as a whole can be miniaturized. Further, the negative voltage rectification circuit 14a, the electronic oscillator 14b and the positive voltage rectification circuit 14c of the power supply circuit 14 are composed of capacitors, diodes, transistors, resistances and so forth, so that they do not need a power relay and the like, with the result that it can be rendered into one-chip configuration.

To note, in the present embodiment, the negative voltage rectification circuit 14a and the positive voltage rectification circuit 14c are respectively disposed anterior and posterior to the electronic oscillator 14b such that a general-purpose device can be used for the output element 13. However, the arrangement of the electronic oscillator is not limited to that shown in FIG. 3, but may well be configured in different ways. The point is to ensure that the power supply circuit 14 securely halts the power supply to the output element 13 according as the failure detection means 11 detects malfunction of the processor and halts the alternating signal 21.

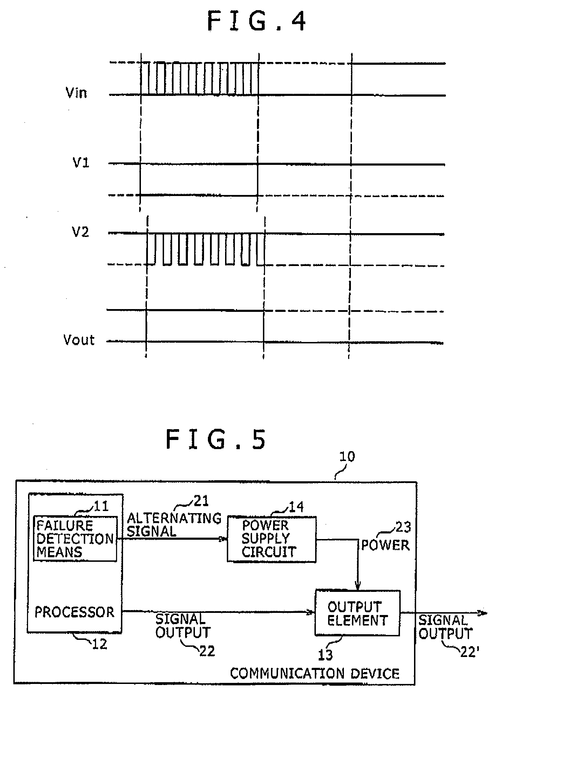

FIG.4 is a view showing the operational voltages at the respective sections of a concrete example of the power supply circuit shown in FIG.3.

Herein, a voltage of the alternating signal 21 inputted to the power supply circuit 14 is referred to as 'Vin'; an output voltage of the negative voltage rectification circuit 14a is referred to as 'V1'; an output voltage of the electronic oscillator 14b is referred to as 'V2'; and an output voltage of the positive voltage rectification circuit 14c is referred to as 'Vout'.

The negative voltage rectification circuit 14a is a rectification circuit to input an alternating signal and to output a negative DC voltage, so that while the voltage 'Vin' continues its oscillation state, the negative voltage rectification circuit 14a makes the output voltage 'V1' a negative DC voltage. Provided that the failure detection means 11 detects malfunction of the processor so as to make the voltage 'Vin' halt its oscillation state, a voltage from the capacitor C1 is not charged to that C2, so that the output voltage V1 is coupled to the reference voltage through the diodes D1 and D2, with the result that the output voltage V1 is left the reference voltage irrespectively of whether the output voltage of the rectification circuit 14a is on a low voltage side or a high voltage side when such oscillation state is halted.

The electronic oscillator 14b is a circuit to input a negative DC voltage and to output an alternating signal oscillating to a negative voltage side, so that while the output voltage 'V1' is a negative DC voltage, the electronic oscillator 14b makes the output voltage 'V2' an alternating signal oscillating to a negative voltage side whereas when the output voltage 'V1' is a reference voltage, the oscillation of the output voltage 'V2' is halted as well so as to be left a reference voltage.

The positive voltage rectification circuit 14c is a rectification circuit to input an alternating signal and to output a positive DC voltage. While the output voltage 'V2' is an alternating signal oscillating to a negative voltage side, the rectification circuit 14c makes the capacitor C4 charged through the diode D4 when the output voltage 'V2' is a negative voltage while making an electric charge of the capacitor C4 moved through the diode D5 to charge the capacitor C5 and the output voltage 'Vout' a positive DC voltage when the output voltage 'V2' turns to be a reference voltage. Upon the oscillation of the output voltage 'V2' being halted, a voltage is not charged from the capacitor C4 to that C5, so that the output voltage 'Vout' is left a reference voltage.

Through the above operations, upon the failure detection means 11 detecting malfunction of the processor so as to halt the alternating signal 21 and to halt the oscillation state of the voltage 'Vin', the output voltage 'V1' of the negative voltage rectification circuit 14a turns to be a reference voltage, which leads to halting the oscillation of the electronic oscillator 14b so as to make the output voltage 'V2' a reference voltage likewise, which finally makes the output voltage 'Vout' of the positive voltage rectification circuit 14c a reference voltage as well, with the result that the power 23 supply to the output element 13 is halted.

To note, in the present embodiment, the failure detection means 11 is disposed independently from the processor 12, but may well be incorporated in the latter as shown in FIG.5.

### Second Embodiment

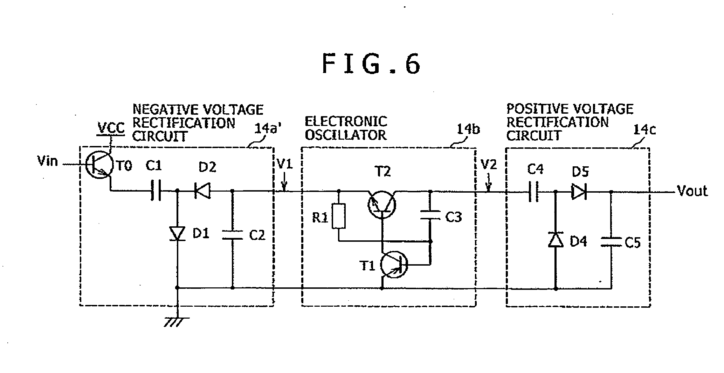

FIG.6 is a view showing a concrete example of the power supply circuit according to the second embodiment of the present invention.

In the first embodiment, it is arranged such that the power to the output element 13 is supplied based on the voltage 'Vin' of the alternating signal, but the voltage 'Vin' is a signal outputted by the failure detection means 11, so that there is likelihood that shortage in the power to drive the output element 13 might occur.

In this case, the negative voltage rectification circuit may well be arranged as shown in FIG.6 with the reference numeral 14a', to an input side of which circuit 14a' a power amplification transistor T0 coupled to a DC power supply having a positive voltage 'VCC' is added. The transistor T0 uses the 'Vin' outputted from the failure detection means 11 as a switching trigger and switches on/off the 'VCC' so as to output an alternating signal whose power is amplified.

The above arrangement allows the alternating signal whose power is amplified to be inputted to the negative voltage rectification circuit 14a' , so that the power to drive the output element 13 is secured. Providing that the transistor T0 is short-circuited so as to let the 'VCC' flow into the rectification circuit 14a', because the `VCC' is a positive DC voltage, the rectification circuit 14a' cannot generate a negative voltage so that it cannot drive the subsequent electronic oscillator 14b, with the result that the last output voltage 'Vout' cannot be generated.

The other arrangement hereof is the same as the first embodiment.

### Third Embodiment

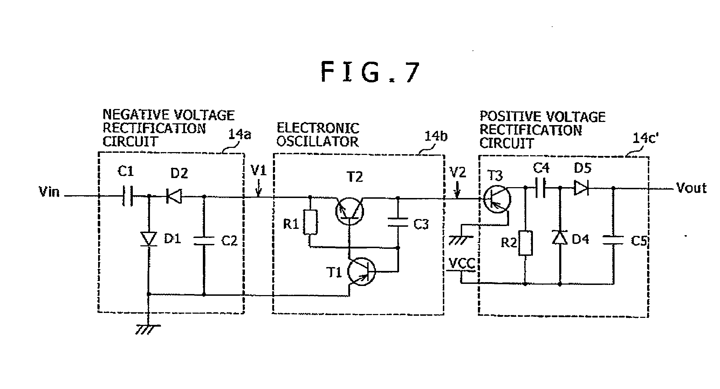

FIG. 7 is a concrete example of the power supply circuit according to the third embodiment of the present invention.

In the present embodiment, a transistor T3 is provided to an input side of a positive voltage rectification circuit 14c', to a base side of which transistor an output voltage 'V2' of the electronic oscillator 14b is supplied and an emitter side of which is grounded while a collector side of which is coupled to the capacitor C4, in which a resistance R2 coupled between the collector and the capacitor C4, the diode D4 and the capacitor C5 are coupled to a reference voltage 'Vcc' lower than the operational voltage of the output element 13.

The above arrangement allows a positive DC voltage obtained by rectifying with the positive voltage rectification circuit 14c' an alternating signal forwarded through the negative voltage rectification circuit 14a and the electronic oscillator 14b and oscillating to a negative voltage side to be added to the reference voltage so as to be used for the operational voltage of the output element 13, which makes the output voltage of the negative voltage rectification circuit 14a and the electronic oscillator 14b smaller because that output voltage may well be sufficient with difference between the reference voltage and the operational voltage of the output element 13, thereby, further facilitating the power supply circuit 14 to be carried on the same board where the processor is disposed.

As described above, according to the safety-related communication device according to the present invention, on account that a fail-safe signal output can be realized on the same board where the processor is disposed without using the power relay in such a manner that an alternating signal outputted from the failure detection means arranged to normally output the alternating signal whereas to halt the output of such signal at the time of malfunction is converted into the power for the output element 13 arranged to generate a signal output, it is highly expected that the present safety-related communication device gains popularity among the concerned as a highly reliable and economical product.

## Claims

1. A safety-related communication device comprising a failure detection means (11) to normally output an alternating signal (21) whereas to halt an output of the alternating signal (21) at a time of malfunction; a processor; an output element (13) to take as input a signal output (22) from the processor so as to generate a signal output (22'), and a power supply circuit (14) to supply power (23) to the output element (13), the power supply circuit (14) being arranged such that it converts the alternating signal (21) outputted from the failure detection means (11) so as to output the power (23) for the output element (13) whereas the power (23) supply to the output element (13) is halted at the time of malfunction,
**characterised in that**:
in the power supply circuit (14), a negative voltage rectification circuit (14a), an electronic oscillator (14b) and a positive voltage rectification circuit (14c) are coupled in series and have a reference voltage in common;
the negative voltage rectification circuit (14a) is arranged to receive the alternating signal and output a negative DC voltage, the electronic oscillator (14b) is arranged to receive the negative DC voltage and output an alternating signal oscillating to a negative voltage side, and the positive voltage rectification circuit (14c) is arranged to receive the alternating signal oscillating to a negative side and output a positive DC voltage; and the positive voltage rectification circuit (14c) is arranged such that it supplies the power (23) to the output element (13) based on the alternating signal (21) inputted to the negative voltage rectification circuit (14a).

2. The safety-related communication device according to claim 1, wherein the negative voltage rectification unit (14c) has capacitors (C1, C2) and diodes (D1, D2) and the electronic oscillator has a capacitor (C3) and transistors (T1, T2) and the positive voltage rectification circuit (14c) has capacitors (C4, C5) and diodes (D4, D5).

3. The safety-related communication device according to claim 1 or 2 wherein a power amplification transistor (T0) coupled to a DC power supply (VCC) having a positive voltage is provided to an input side of the negative voltage rectification circuit (14a).

4. The safety-related communication device according to claim 1 or 2 wherein a transistor (T3) is provided to an input side of the positive voltage rectification circuit (14c) and the positive voltage rectification circuit (14c) is coupled to a reference voltage (Vcc) lower than an operational voltage of the output element (13).

## Patentansprüche

1. Sicherheitsrelevante Kommunikationsvorrichtung umfassend:
ein Fehlererkennungsmittel (11) zum normalen Ausgeben eines alternierenden Signals (21), wohingegen eine Ausgabe des alternierenden Signals (21) zum Zeitpunkt einer Fehlfunktion gestoppt wird;
einen Prozessor;
ein Ausgabeelement (13), das eine Signalausgabe (22) von dem Prozessor als Eingabe nimmt, um eine Signalausgabe (22') zu erzeugen; und
einen Leistungsversorgungsschaltkreis (14), um Leistung (23) dem Ausgabeelement (13) bereitzustellen, wobei der Leistungsversorgungsschaltkreis (14) so ausgelegt ist, dass er das von dem Fehlererkennungsmittel (11) ausgegebene alternierende Signal (21) umwandelt, um die Leistung (23) für das Ausgabeelement (13) auszugeben, wohingegen die Leistungsversorgung des Ausgabeelements (13) zum Zeitpunkt einer Fehlfunktion gestoppt wird,
**dadurch gekennzeichnet, dass**:
in dem Leistungsversorgungsschaltkreis (14) ein negativer Spannungsgleichrichtschaltkreis (14a), ein elektronischer Oszillator (14b) und ein positiver Spannungsgleichrichtschaltkreis (14c) in Reihe gekoppelt sind und eine gemeinsame Bezugsspannung aufweisen;
der negative Spannungsgleichrichtschaltkreis (14a) dazu ausgelegt ist, das alternierende Signal zu empfangen und eine negative Gleichspannung auszugeben,
der elektrische Oszillator (14b) dazu ausgelegt ist, die negative Gleichspannung zu empfangen und ein alternierendes Signal, das auf einer negativen Spannungsseite oszilliert, auszugeben, und
der positive Spannungsgleichrichtschaltkreis (14c) dazu ausgelegt ist, das alternierende Signal, das auf einer negativen Seite oszilliert, zu empfangen und eine positive Gleichspannung auszugeben; und
der positive Spannungsgleichrichtschaltkreis (14c) dazu ausgelegt ist, dass er die Leistung (23) dem Ausgabeelement (13) anhand des dem negativen Spannungsgleichrichtschaltkreis (14a) eingegebenen alternierenden Signals (21) bereitstellt.

2. Sicherheitsrelevante Kommunikationsvorrichtung nach Anspruch 1, wobei die negative Spannungsgleichrichteinheit (14c) Kondensatoren (C1, C2) und Dioden (D1, D2) aufweist, der elektronische Oszillator einen Kondensator (C3) und Transistoren (T1, T2) aufweist, und der positive Spannungsgleichrichtschaltkreis (14c) Kondensatoren (C4, C5) und Dioden (D4, D5) aufweist.

3. Sicherheitsrelevante Kommunikationsvorrichtung nach Anspruch 1 oder 2, wobei ein Leistungsverstärkertransistor (T0), der mit einer eine positive Spannung aufweisende Gleichspannungsleistungsversorgung (VCC) gekoppelt ist, an einer Eingabeseite des negativen Spannungsgleichrichtschaltkreises (14a) vorgesehen ist.

4. Sicherheitsrelevante Kommunikationsvorrichtung nach Anspruch 1 oder 2, wobei ein Transistor (T3) an einer Eingabeseite des positiven Spannungsgleichrichtschaltkreises (14c) vorgesehen ist und der positive Spannungsgleichrichtschaltkreis (14c) mit einer Bezugsspannung (VCC) gekoppelt ist, die kleiner als eine Betriebsspannung des Ausgabeelements (13) ist.

## Revendications

1. Dispositif de communication sécurisée comportant un moyen de détection de défaillance (11) pour délivrer normalement en sortie un signal alternatif (21) ou interrompre une sortie du signal alternatif (21) au moment d'un défaut de fonctionnement, un processeur, un élément de sortie (13) pour prendre en tant qu'entrée une sortie de signal (22) du processeur de manière à générer une sortie de signal (22'), et un circuit d'alimentation en puissance (14) pour alimenter en puissance (23) l'élément de sortie (13), le circuit d'alimentation en puissance (14) étant conçu de sorte qu'il convertit le signal alternatif (21) délivré en sortie par le moyen de détection de défaillance (11) de manière à délivrer en sortie la puissance (23) pour l'élément de sortie (13) alors que l'alimentation en puissance (23) de l'élément de sortie (13) est interrompue au moment d'un défaut de fonctionnement, **caractérisé en ce que** :
dans le circuit d'alimentation en puissance (14), un circuit de redressement de tension négative (14a), un oscillateur électronique (14b) et un circuit de redressement de tension positive (14c) sont montés en série et ont une tension de référence en commun,
le circuit de redressement de tension négative (14a) est conçu pour recevoir le signal alternatif et délivrer en sortie une tension en courant continu négative, l'oscillateur électronique (14b) est conçu pour recevoir la tension en courant continu négative et délivrer en sortie un signal alternatif oscillant sur un côté de tension négative, et le circuit de redressement de tension positive (14c) est conçu pour recevoir le signal alternatif oscillant sur un côté négatif et délivrer en sortie une tension en courant continue positive, et le circuit de redressement de tension positive (14c) est conçu de sorte qu'il alimente en puissance (23) l'élément de sortie (13) sur la base du signal alternatif (21) entré dans le circuit de redressement de tension négative (14a).

2. Dispositif de communication sécurisée selon la revendication 1, dans lequel l'unité de redressement de tension négative (14c) comporte des condensateurs (C1, C2) et des diodes (D1, D2) et l'oscillateur électronique comporte un condensateur (C3) et des transistors (T1, T2) et le circuit de redressement de tension positive (14c) comporte des condensateurs (C4, C5) et des diodes (D4, D5).

3. Dispositif de communication sécurisée selon la revendication 1 ou 2, dans lequel un transistor d'amplification de puissance (T0) couplé à une alimentation de puissance en courant continu (VCC) ayant une tension positive est agencé sur un côté d'entrée du circuit de redressement de tension négative (14a).

4. Dispositif de communication sécurisée selon la revendication 1 ou 2, dans lequel un transistor (T3) est agencé sur un côté d'entrée du circuit de redressement de tension positive (14c) et le circuit de redressement de tension positive (14c) est couplé à une tension de référence (Vcc) inférieure à une tension opérationnelle de l'élément de sortie (13).
